# EUROPÄISCHE PATENTANMELDUNG

(11) **EP 1 953 478 A2**
(43) Veröffentlichungstag der Anmeldung: **06.08.2008**
(21) Anmeldenummer: 08000997.0
(22) Anmeldetag: 19.01.2008
(51) Int. Cl.: F25B 9/00, F25B 9/02

(54) **Verfahren zur Kühlung eines Detektors**

(30) Priorität: 01.02.2007 DE 102007004999; 21.06.2007 DE 202007008674 U
(71) Anmelder: Diehl BGT Defence GmbH & Co.KG, 88662 Überlingen (DE)
(72) Erfinder: Hingst, Uwe, Dr., 88094 Oberteueringen (DE)
(74) Vertreter: Diehl Patentabteilung

(57) **Zusammenfassung**

Es wird ein Verfahren zur Kühlung eines Detektors, insbesondere eines IR-Detektors (2) im Suchkopf eines Lenkflugkörpers, angegeben, wobei nach einer Entspannung eines druckbeaufschlagten Fluids das expandierende Gas zur Kühlung des Detektors verwendet wird. Dabei wird als Fluid ein positives Azeotrop bildendes Gemisch, umfassend Argon oder Stickstoff als eine Hauptkomponente und zumindest ein Alkan als eine Nebenkomponente, entspannt. Bevorzugt befindet sich die Zusammensetzung im Bereich eines eutektischen Gemisches befinden, um ein Ausfrieren einer Komponente an der Expansionsdüse zu vermeiden. Hierdurch kann gegenüber reinen Kühlgasen wie Stickstoff oder Argon eine erhebliche Laufzeitverlängerung des Kühlers und schnellere Abkühlung des Detektors bei gleichen Randbedingungen erzielt werden.

## Beschreibung

Die Erfindung betrifft ein Verfahren zur Kühlung eines Detektors, insbesondere eines IR-Detektors im Suchkopf eines Lenkflugkörpers, wobei nach einer Entspannung eines druckbeaufschlagten Fluids das expandierende Gas zur Kühlung des Detektors verwendet wird.

Ein derartiges Verfahren nutzt zur Kühlung den so genannten Joule-Thomson-Effekt aus, der das von einem idealen Gas abweichende Verhalten eines realen Gases bei seiner Expansion ausnutzt. Wird ein reales Gas unterhalb seiner Inversionstemperatur entspannt, so kühlt es sich aufgrund des positiven Joule-Thomson-Koeffizienten - also über bestimmte Wechselwirkungen der Gasmolekühle - ab. Dieses abgekühlte und expandierte Gas kühlt wiederum mittels eines Gegenstromwärmetauschers das zulaufende Hochdruckgas weiter ab, bis in dessen Brüdenraum das expandierende Hochdruckgas unterhalb der Siede- und Taulinie - also im Nassdampfgebiet - teils als flüssige, kondensierte und teils als gasförmige Phase vorliegt. Diese Abkühlung des Gases bis zum Siedepunkt des jeweiligen realen Gases bei einer Expansion auf circa 1 bar unterhalb seiner Inversionstemperatur wird technisch in vielfältiger Weise zur Herstellung von tiefen Temperaturen oder zur Abkühlung von temperaturempfindlichen Geräten, wie insbesondere Detektoren, eingesetzt. Insbesondere optische Detektoren im Infrarotbereich, so genannte IR-Detektoren, müssen auf Temperaturen kleiner 100 K abgekühlt werden, um ein gutes Signal-zu-Rausch-Verhältnis zu erzielen.

Bei auf dem Joule-Thomson-Effekt beruhenden Entspannungs- oder Joule-Thomson-Kühlern wird ein geeignetes druckbeaufschlagtes Arbeitsgas (Hochdruckkühlgas) mittels einer Drossel oder Düse entspannt und das austretende, sich aufgrund der isenthalpen Expansion abkühlende Gas (a) zur Temperaturabsenkung des Gaszulaufs und (b) eines der Entspannungsdüse benachbart angeordneten Detektors eingesetzt. Dabei wird das expandierende und teilweise sich verflüssigende Gas direkt gegen die zu kühlende Detektorrückwand gerichtet, oder gegen eine vom austretenden Gas beaufschlagbare thermisch gut leitende Zwischenwand, an deren Vorderseite der Detektor angeordnet ist. Um die Siedetemperatur des Kühlgases zu erreichen und bei dieser Siedetemperatur des jeweiligen Gases eine gute Kühlleistung zu erzielen, ist es bekannt, dass das der Entspannungsdüse - auch Drossel genannt - hochdruckseitig zueilende Arbeitsgas in Gegenstromrichtung von dem rückeilenden und entspannten Arbeitsgas durch einen entsprechenden Gegenstromwärmetauscher vor dem endgültigen Austritt in die Umgebung abzukühlen ist.

Insbesondere bei beengten Einbauverhältnissen und geringen Energieressourcen ist es nicht möglich, einen Joule-Thomson-Kühler in einem geschlossenen Kühlkreislauf beispielsweise nach dem Lindeverfahren zu betreiben, wobei das expandierte Arbeitsgas unter Wärmeabfuhr erneut komprimiert und druckbeaufschlagt zur Detektor-Abkühlung wiederum der Expansionsdüse zugeführt wird. Denn Kompressoren benötigen Bauraum und zum Betrieb viel Energie, deren dissipative Wärme auch noch abgeführt werden muss. Für derartig beengte Einsatzbedingungen sind so genannte offene Joule-Thomson-Kühler bekannt, wobei das druckbeaufschlagte Arbeitsgas aus einem Hochdruckgasbehälter nach seiner Expansion, nach der geforderten Detektorkühlung und nach dem Rücklauf im Gegenstromwärmetauscher in die Umgebung abgegeben wird. Derartige offene Joule-Thomson-Kühler werden beispielsweise zur Kühlung von IR-Detektoren in den Suchköpfen von Lenkflugkörpern eingesetzt. Dort steht weder Bauraum noch Energie derart zur Verfügung, dass ein Kompressorsystem für einen geschlossenen Joule-Thomson-Kühler eingesetzt werden kann. Ein zweistufiger, offener Joule-Thomson-Kühler zur Kühlung eines IR-Detektors im Suchkopf eines Lenkflugkörpers ist beispielsweise aus der EP 0 432 583 B1 bekannt.

Da in einem Flugkörper aus nahe liegenden Gründen nicht ein beliebiger Vorrat an Arbeitsgas aus einem Hochdruckbehälter mitgeführt werden kann und ein Teil der Trägerflugzeuge kein Hochdruckarbeitsgas vom Flugzeug oder Launcher, auch Startschiene genannt, zugeführt werden kann, ist entweder zur schnellen Abkühlung eines IR-Detektors im Flugkörper selbst oder zur lang anhaltenden Detektorkühlung oder für höhere Kühlleistungen oder für Kombinationen davon nur ein begrenzter Vorrat an Arbeitsgas in einer Druckflasche mitführbar.

Nachteiligerweise reichen die aus Bauraumgründen begrenzten Volumina der mitgeführten Hochdruckflaschen bis zu einem maximalen Volumen von 500 cm³ in gebräuchlichen Luft-Luft-Flugkörper nur für eine begrenzte Kühlerlaufzeit zur Kühlung eines IR-Detektors. Unter den gegebenen Bedingungen werden je nach Umgebungstemperatur mit Luft, Stickstoff oder Argon als Arbeitsgas, mit denen sich eine Temperaturabsenkung des IR-Kühlers auf unter 100 K Siedetemperatur erzielen lässt, derzeit nur Kühlerlaufzeiten zwischen 1,5 und 3 Stunden erreicht. Neuartige Einsatzszenarien für moderne Kampfjets gehen jedoch mittlerweile von Flugzeiten aus, die 6 bis 8 Stunden betragen können, währenddessen der IR-Detektor des Flugkörpers auf kryogener Einsatztemperatur von kleiner 100 K gehalten werden muss, damit der Flugkörper durchgehend voll einsatzbereit ist.

In anderen Auslegungsfällen mit kurzen Kühlerlaufzeiten müssen aus dem begrenzten Hochdruckflaschenvolumina von wenigen Kubikzentimetern aber bei hohen Gasdrücken über den Joule-Thomson-Kühler Detektorabkühlzeiten von unter 1,5 bis 2 Sekunden erreicht werden. Dies ist z. B. der Fall bei tragbaren Boden-Luft-Flugkörpern gegen feindliche Kampfflugzeuge (so genannte "Manpads" - Manportable Air Defence Systems - und bei schiffsgestützten Flugkörperabwehrsystemen (gegen so genannte "Seaskimmer" - tief anfliegende Flugkörper -) und gegnerische Kampfflugzeuge. In besonderen Fällen - wie beispielsweise Verbesserungen von Flugkörpern - muss aus diesen geringen Flaschenvolumina eine Kombination aus wesentlich kürzerer Abkühlzeit des IR-Detektors bei längerer Kühlerlaufzeit und höheren abzutransportierenden Kühllasten vom IR-Detektor gleichzeitig erreicht werden.

Aufgabe der Erfindung ist es, ein Verfahren zur Kühlung eines Detektors, insbesondere eines IR-Detektors im Suchkopf eines Lenkflugkörpers der eingangs genannten Art anzugeben, womit sich bei einem begrenzten Vorratsvolumen an Arbeitsgas eine möglichst lange Kühlerlaufzeit erzielen lässt.

Diese Aufgabe wird für ein Verfahren zur Kühlung eines Detektors, insbesondere eines IR-Detektors im Suchkopf eines Lenkflugkörpers, wobei nach einer Entspannung eines druckbeaufschlagten Fluids, insbesondere oberhalb des kritischen Punkts, das expandierende Gas als ein Kühlgas und -flüssigkeit zur Wärmeabfuhr aus dem Detektor verwendet wird, erfindungsgemäß dadurch gelöst, dass als Fluid ein positives Azeotrop bildendes Gasgemisch, bei dem der Siedepunkt des Gemisches unterhalb der der reinen Komponenten liegt, umfassend Argon oder Stickstoff als eine Hauptkomponente und zumindest ein Alkan (CₓH_{y}) als eine Nebenkomponente, entspannt wird.

Die Erfindung geht dabei von der Überlegung aus, dass die bislang eingesetzten Kühlgase mit Siedetemperaturen unterhalb von 90 K, wie Stickstoff, Argon oder Sauerstoff oder Luft, keine ausreichende Kühlkapazität für die gewünschte Laufzeitverlängerung aufweisen. So kann selbst durch Anwendung einer Hochdruckflasche, in der das Arbeitsgas mit einem Druck oberhalb 300 bar beaufschlagt ist, nicht zu der gewünschten Laufzeitverlängerung um einen Faktor von zumindest 2 bis 3 führen. Deren Kühlvermögen - d. h. integraler Joule-Thomson-Koeffizient - ist einfach zu gering. Für weitere mögliche Arbeitsgase wie Neon, Helium oder Wasserstoff mit Siedetemperaturen unterhalb von 100 K liegen jedoch die Inversionstemperaturen unter der Raumtemperatur von etwa 25° C. Somit führt eine Entspannung derartiger Arbeitsgase unter den gegebenen Kühlerbedingungen ohne eine vorherige Vorkühlung des Hochdruckgases unter ihre jeweilige Inversionstemperatur nicht zu der gewünschten Abkühlung, sondern zu einer Gastemperaturerhöhung. Außerdem ist auch bei Nutzung einer Vorkühlung bei diesen Gasen das Kühlvermögen beziehungsweise der integrale Joule-Thomson-Effekt zu gering.

Weiter geht die Erfindung von der Überlegung aus, dass bestimmte Gase u.a. mit höherer Molmasse, wie beispielsweise die Alkane, zwar wesentlich höhere Kühlkapazitäten hinsichtlich des Joule-Thomson-Effekts aufweisen, ihre Siedetemperaturen jedoch alle oberhalb von 100 K liegen. Somit ist eine Kühlung des IR-Detektors auf Temperaturen von wenigstens 100 K mit reinen Alkanen als Kühlgas nicht möglich.

Schließlich erkennt die Erfindung, dass sich die Eigenschaft einer hohen Kühlkapazität hinsichtlich des Joule-Thomson-Effektes und einer gewünschten niedrigen Siedetemperatur unter Berücksichtigung der Gasgemisch-Thermodynamik nur in einem Gasgemisch aus mehrerer Komponenten erzielen lässt. Insbesondere aufgrund bestimmter Wechselwirkungen einzelner Komponenten miteinander, existieren vereinzelt bestimmte reale Gasgemische, die ein so genanntes positives Azeotrop bilden, d. h. im T,x-Diagramm Gemischsiedetemperaturen unterhalb der Siedetemperaturen der einzelnen reinen Komponenten besitzen. Dabei weist unter anderem auch eine über das Konzentrationsverhältnis der Komponenten aufgetragene Dampfdruckkurve im p,x-Diagramm bei einer spezifischen Zusammensetzung ein lokales Maximum auf. x steht in diesem Zusammenhang für die Konzentration, T für Temperatur und p für Druck. Außerdem berühren sich bei binären Gemischen aus zwei Komponenten im Phasendiagramm dort Siede- und Dampfdruckkurve. Das Gasgemisch verhält sich dort wie ein reines Gas. Ein Gemisch dieser Zusammensetzung wird als Azeotrop oder als azeotropes Gemisch bezeichnet: Beim Sieden oder Kondensieren verhalten sich azeotrope Gemische wie ein reiner Stoff. Bei der Zusammensetzung von Gemischen zu positiven azeotropen Gemischen, bei denen die Dampfdruckkurven ein Maximum aufweisen, haben alle diese positiv-azeotropen Gemische bei diesen ganz bestimmten Zusammensetzungen Siedetemperaturen, die weit unter denen der einzelnen reinen Gaskomponenten sind. Verdampft z. B. die kondensierte Phase des expandierten Kühlgases in einen Brüdenraum bzw. Entspannungsraum eines Kühlers durch Wärmeaufnahme von der Detektorseite, so siedet dieses azeotrope Gemisch wie ein reines Gas bei dieser reduzierten konstant bleibenden Gemischsiedetemperatur unter Beibehaltung der Gemischzusammensetzung. Bei Gemischen aus mehr als zwei Gaskomponenten bildet sich - je nach Anzahl der Komponenten - nach der Gibb'schen Phasenregel kein azeotroper Punkt bestimmter Konzentration mehr, sondern ein zwei- oder mehrdimensionales "Feld/Gebiet" mit bestimmten, für die einzelnen Gaskomponenten genau zu ermittelnder Konzentrationsbereiche. Da azeotrope Gemische druckabhängig sind, muss das jeweilige azeotrope Gemisch für die herrschenden Druckbereiche im Brüdenraum, um 1 bis 3 bar (0,1-0,3 MPa) ermittelt werden.

Umfangreiche Untersuchungen haben nun gezeigt, dass sich ein Gemisch, umfassend Argon oder Stickstoff (evtl. auch Luft) als eine Hauptkomponente und zumindest ein Alkan (CₓH_{y}) als eine Nebenkomponente, wobei das Alkan bzw. die Alkane derart ausgewählt sind, dass das Gemisch ein positives Azeotrop (mit Siedepunkt unterhalb von 100 K) bildet, in nur bestimmten Konzentrationsverhältnissen, die die eng begrenzte azeotrope Zusammensetzung umfassen, sich zur Kühlung eines offenen Joule-Thomson-Kühlers wie ein reines Gas mit einer gegenüber der höher siedenden Komponenten der Alkane im Bereich mit den niedrigen Siedetemperaturen der Hauptkomponenten (N₂& Ar) verhält. Unter den dann gegebenen Bedingungen stellt sich in dem Entspannungsraum (Brüdenraum) nach der Expansionsdüse ein dynamisches Gleichgewicht aus einer Flüssigphase und einer Gasphase bei der Siedetemperatur dieser Flüssig-/Gasphase entsprechenden Temperatur des azeotropen Gemisches ein. Das Gasgemisch aus Haupt- und Nebenkomponenten wird ferner so gewählt, dass nicht nur ein positiv-azeotropes Gasgemisch vorliegt, sondern die jeweilige Gemischsiedetemperatur möglichst unter 100 K liegt.

Im Brüdenraum (Nassdampfgebiet) liegt nach der Expansion ein Gemisch aus Gas und Flüssigkeit zur Kühlung des Detektors vor. Wesentlich ist hierbei, dass über weite Druckbereiche (von 3 bis 50 MPa) eine größere Menge Flüssigkeit und eine geringere Menge Gas produziert wird, da hauptsächlich die Flüssigkeitsmenge mittels der Verdampfungsenthalpie dieses azeotropen Gemisches das Kühlvermögen der Kühleranordnung bestimmt. Bei der Kühlung des Detektors wandelt sich laufend bei konstanter Siedetemperatur die im Brüdenraum produzierte flüssige Phase in die Gasphase. Die Kühlerleistung wird hierbei maßgeblich durch die Gemischverdampfungsenthalpie bestimmt, weniger durch die reine konvektive Gaskühlung. Hochdruckseitig strömt laufend über die Expansionsdüse neues Gas-/Flüssigkeitsgemisch im Brüdenraum zu und hält so den Kühlprozess aufrecht. Solange eine flüssige Phase vorliegt, verharrt das Kühlsystem bei der konstant tiefen azeotropen Gemischsiedetemperatur, hier bei Temperaturen unter den geforderten 100 K. Da das azeotrope Gemisch im Brüdenraum aus Gas und Flüssigkeit in beiden Phasen die gleiche Konzentration besitzt und sich wie ein reines Gas verhält, ändert sich zeitlich auch nicht die azeotrope Gemischzusammensetzung in beiden Phasen und damit auch nicht die Gemischsiedetemperatur unter 100 K, obwohl die einzelnen Alkane Siedetemperaturen weit über 100 K besitzen. Das expandierte Gas, wie auch das entstehende Gas aus der verdampfenden Flüssigkeitsmenge strömt zur Vorkühlung des Hochdruckzulaufs aus dem Brüdenraum durch den Gegenstromwärmetauscher in die Umgebung. Die Gasphase aus dem Brüdenraum wird letztendlich als verbrauchtes Gasgemisch außen abgeführt. Gleichzeitig wird bei diesen azeotropen Gemischen mit den Hauptkomponenten Stickstoff oder Argon die höhere Kühlkapazität eines Alkans als Nebenkomponente gegenüber Stickstoff oder Argon aufgrund der höherer Joule-Thomson-Koeffizienten, d. h. Kühlkapazitäten, genutzt. Ferner wird die größere Molmasse der meisten hier verwendeten Alkane mit genutzt, so dass mit derselben Volumenmenge an druckbeaufschlagtem Fluid insgesamt eine noch längere Laufzeit des Joule-Thomson-Kühlers erzielt werden kann.

Unter einem Fluid in den Druckbehältern wird hierbei der Aggregatzustand des druckbeaufschlagten Gasgemisches oberhalb des kritischen Punkts in einem T,s-Diagramm verstanden, bei dem keine Trennung von Flüssigkeit zum Gas feststellbar ist, d. h. kein Meniskus. Hierbei steht T für Temperatur und s für Entropie. Die einzelnen Gaskomponenten Stickstoff, Argon und die verschiedenen Alkane besitzen bei einem bestimmten Druck ein Maximum bzgl. deren Kühlkapazität, d. h. Joule-Thomson-Koeffizient, der bei Raumtemperaturen vielfach im Bereich von 200 bis 400 bar (20-40 MPa) liegt. Im Gemisch befinden sich die einzelnen Gaskomponenten aber nur unter ihrem Partialdruck, der entsprechend der Gasgemischzusammensetzung unter dem Gesamtdruck liegt. Zur Optimierung des Kühlprozesses muss bei den Gasgemischen in der Hochdruckflasche somit ein höherer Gesamtdruck vorliegen, damit die einzelnen Gaskomponenten bei ihrem Partialdruck möglichst in den Bereich der optimalen Kühlleistung kommen. Dies kann Drücke bis zu 500 bar (50 MPa) und eventuell sogar von 800 bar (80 MPa) in den Druckbehältern erforderlich machen. Höhere Drücke bedeuten auch gleichzeitig größere verfügbare Gasmengen im Gasbehälter und damit zusätzlich noch eine längere Laufzeit des Kühlers.

Die Verwendung von Alkanen bietet auch den Vorteil, dass durch den höheren Joule-Thomson-Koeffizienten der Kühlprozess erst bei wesentlich geringeren Restdrücken in einer Hochdruckversorgung zusammen bricht und sich damit im Vergleich zu Stickstoff und Argon längere Kühlerlaufzeiten ergeben, da die Restgase in der Hochdruckflasche noch weiter zu niedrigeren Drücken für die Kühlung genutzt werden können.

Die Verwendung von Alkanen bietet weiter den Vorteil, dass viele organische Verunreinigungen, die beispielsweise aus der Gasherstellung, aus der Kompression oder aus einer Druckflasche bzw. aus Rohrleitungssystemen stammen, im Gas gelöst werden und somit nicht an der Expansionsdrossel ausfallen und damit den Kühlprozess durch eine Drosselblockade beenden können.

In einer vorteilhaften Ausgestaltung der Erfindung sollte die Siedetemperatur des Azeotrops unterhalb von 100 K, insbesondere unterhalb von 90 K liegen. Je nach gewähltem Gemisch genügt es insofern, wenn die Dampfdruckkurve des ausgewählten Gasgemisches im p,x-Diagramm ein gemischspezifisches lokales Maximum aufweist. Der Siedepunkt des Gemisches besitzt im T,x-Diagramm dann ein Minimum und liegt unter denjenigen der beteiligten reinen Gase. Bei Gemischen aus mehreren Gasen sollte die Gemischsiedetemperatur - für die hier ausgewählten Gemische - nicht wesentlich über der der Hauptkomponente Stickstoff oder Argon liegen, d.h. zwischen 85 und 100 K.

Um zu verhindern, dass bei der Expansion des Gasgemisches, welches hierdurch eine Temperaturabsenkung erfährt, eine Komponente des Gemisches ausfriert und insofern zu einer unerwünschten Zusetzung der Entspannungsdüse führen kann, ist es vorteilhaft, wenn das gesuchte Gemisch aus Haupt- und Nebenkomponenten (Alkanen) derart ausgewählt ist, dass das geforderte azeotrope Gasgemisch außerdem eine Zusammensetzung in der Nähe der eutektischen Zusammensetzung aufweist. Dazu ist es zwingend erforderlich, dass die verschiedenen Gaskomponenten in der flüssigen, kondensierten Phase miteinander löslich sind. Damit bei der Expansion an der Düse kein Ausfall einer festen Phase und damit zu einer Gasflussblockade/Verstopfung dort führen kann, müssen die einzelnen Gaskomponenten im kondensierten flüssigen Zustand miteinander löslich sein; dies bedeutet: Komponente a ist mit Komponente b bei einem dualen Gemisch, Komponente c mit mindestens einer der Komponenten a oder b bei einem Dreiergemisch, Komponente d mit mindestens einer der Komponenten a, b oder c, usw. löslich. Es muss also nicht nur eine bestimmte Gemischzusammensetzung hinsichtlich eines positiven Azeotrops ermittelt werden, es muss auch gleichzeitig die Gemischzusammensetzung dergestalt sein, dass ein Eutektikum vorliegt, damit die Siedetemperatur des vollständig in Lösung vorliegenden Fluids eine niedrigere Gefrierpunktstemperatur einnimmt als die zugehörige Siedetemperatur des Gemisches.

Ein Gemisch einer eutektischen Zusammensetzung ihrer Komponenten ist nämlich dadurch charakterisiert, dass der Schmelzpunkt des Gemisches tiefer liegt als die Schmelzpunkte der reinen Komponenten. Dies ist mit eine wichtige Voraussetzung zur Benutzung von azeotropen Gemischen in Joule-Thomson-Kühlern, da die Gefrier- und Schmelztemperaturen der hier verwendeten einzelnen Alkane höher liegen als die Siedetemperatur des azeotropen Gasgemisches mit diesen Alkanen. Um ein Zusetzen der Expansionsdüse durch ein Ausfrieren einer einzelnen Gaskomponenten hier zu verhindern, muss das vorgeschlagene azeotrope Gasgemisch bevorzugt auch eine eutektische Zusammensetzung besitzen: In den hier vorgeschlagenen Gasgemischen muss die Gemischschmelztemperatur bevorzugt unter der Gemischsiedetemperatur bleiben. In der Gemischflüssigkeitsphase darf kein einzelner fester Aggregatszustand auftreten, d.h. keine einzelne Komponente fällt an der Expansionsdüse aus. Mischphasen, in denen eine der Komponenten in der flüssigen Phase und die andere Komponente im festen Aggregatszustand auftritt, existieren für ein Gemisch der eutektischen Zusammensetzung nicht. Weist daher das Azeotrop eine Zusammensetzung in der Nähe der eutektischen Zusammensetzung auf, so wird ein Ausfrieren einer einzelnen Komponente, beispielsweise der in dem Gemisch befindlichen Nebenkomponente, verhindert, bzw. der Anteil an einer ausfrierenden Komponente signifikant verringert.

Für die eutektische Zusammensetzung des ausgesuchten Gemisches ist insbesondere ein Schmelzpunkt unterhalb 90 K vorteilhaft, besser noch von unter 85 K.

Vorliegend finden zur Kühlung von IR-Detektoren Gasgemische Anwendung, die bei (a) sehr hohen Gasdrücken aus (b) begrenzt verfügbaren Hochdruckgasbehältern über die damit verbundenen höheren Joule-Thomson-Koeffizienten
i. längere Laufzeiten aus dem begrenzten Volumen oder
ii. verkürzte Detektorabkühlzeiten ermöglichen oder
iii. eine größere Kühllast erlauben oder
in Kombination zwei oder alle drei Effekte miteinander erreichen.

Bevorzugt ist das Fluid mit einem Anfangsdruck von mehr als 100 bar (10 MPa), insbesondere von mehr als 300 bar (30 MPa), insbesondere von mehr als 500 bar (50 MPa), insbesondere bevorzugt bis über 800 bar (80 MPa) aus einem begrenzt zur Verfügung stehenden Druckgasbehälter beaufschlagt, damit die einzelnen Gaskomponenten unter ihrem Partialdruck in den optimalen Druckbereich hinsichtlich ihrer jeweiligen Kühlkapazität kommen. Der maximal vorzusehende Anfangsdruck richtet sich somit nach den einzelnen Gasen, deren Molanteilen im Gemisch und damit ihren verschiedenen Partialdrücken. Je nach Gaszusammensetzung sollte der Gesamtdruck so gewählt werden, dass für die einzelnen Gase deren spezifischer Partialdruck möglichst beim maximalen spezifischen Joule-Thomson-Koeffizienten zu liegen kommt. Dies führt zwangsweise zu recht hohen Anfangsdrücken für das Gasgemisch. Durch eine entsprechend hohe Kompression wird die Menge an gespeichertem Fluid erhöht, was sich positiv auf die Laufzeit des Joule-Thomson-Kühlers auswirkt. Mit einer Hochdruckgasflasche kann das Fluid kompakt mit einem Druck bis über 500 bar (teilweise bereits bis 800 bar) beaufschlagt werden. Als Standardausrüstungen sind Druckflaschen mit einem maximalen Fülldruck von 350 bar ohne weiteres verfügbar, zu Versuchszwecken auch schon Druckflaschen bis 800 bar.

Als ein Fluid wird in einer vorteilhaften Ausgestaltung ein Gemisch umfassend 30 bis 70 Vol.-% Stickstoff und 20 bis 80 Vol.-% Methan eingesetzt. Mit diesem einfachen Gemisch werden bereits Einsatztemperaturen eines zu kühlenden IR-Detektors von unterhalb 100 K erzielt und im Vergleich mit dem reinen Stickstoff eine Laufzeitverlängerung von Faktor 2. Bevorzugt wird diesem Fluid als weitere Nebenkomponente Ethan mit einem Anteil von 10 bis 40 Vol.-% zugesetzt. Die weiteren Komponenten Stickstoff und Methan weisen hierbei Anteile von 20 bis 40 Vol.-% bzw. von 10 bis 40 Vol.-% auf. Auch hier verbleibt die Siedetemperatur unter 100 K, die Laufzeitverlängerung liegt hierbei schon über dem Faktor 3.

Als eine weiter geeignete Mischung hat sich als Fluid ein Gemisch umfassend 30 bis 70 Vol.-% Stickstoff, 15 bis 35 Vol.-% Ethan und 15 bis 35 Vol.-% Propan herausgestellt. In Hinblick auf eine weitere Absenkung der erzielbaren Tieftemperatur und höheren Kühlkapazität kann diesem Gemisch als weitere Komponente Methan mit einem Anteil von 10 bis 30 Vol.-% zugesetzt werden. Die weiteren Komponenten, Stickstoff, Ethan und Propan weisen hierbei Anteile von 20 bis 70 Vol.-%, 10 bis 25 Vol.-% bzw. 10 bis 20 Vol.-% auf. In allen Fällen, die zu einem positiv-azeotropen und eutektischen Gemisch führen, liegt die Siedetemperatur des Gasgemisches unter 100 K, es fällt keine feste Phase aus und die Laufzeitverlängerung im Vergleich gegenüber dem Stickstoff beträgt je nach Umgebungstemperatur Faktor 3 bis 4.

Alle hier aufgeführten Gasgemische zur Laufzeitverlängerung bei Joule-Thomson-Kühlern bedingen durch die größere Kühlkapazität zusätzlich signifikant kürzere Abkühlzeiten, größere Kühllasten und Kombination davon, was bei bestimmten Flugkörpertypen entscheidend sein kann.

In einer alternativen Ausgestaltung wird als Fluid ein Gemisch umfassend 45 bis 60 Vol.-% Argon und 35 bis 50 Vol.-% Methan eingesetzt. Zwar hat das Azeotrop dieses Gemisches, welches eine Zusammensetzung von 56 Vol.-% Argon und 44 Vol.-% Methan aufweist, eine gegenüber Argon leicht erhöhte Siedetemperatur von etwa 96 K (Argon hat eine Siedetemperatur von 87,3 K), jedoch ist der Siedepunkt gegenüber Methan weit genug abgesenkt, so dass sich im Entspannungsraum ein Nassdampf-Gemisch der azeotropen Zusammensetzung mit einer Siedetemperatur von unterhalb 100 K einstellt. Somit ist ein verwendbares Fluid gegeben, mit dem sich ein Detektor auf den gewünschten Arbeitspunkt von unter 100 K einstellen lässt.

Weitere Details über Fluide auf der Basis von Stickstoff, wobei als Nebenkomponenten Alkane eingesetzt sind, können insbesondere der GB 1 3336 892 entnommen werden. Die dort beschriebenen Zusammensetzungen werden jedoch zur Verwendung in einem Kühlkreislauf mit geringen Kompressionsdrücken angegeben, insbesondere für geschlossene Kreisläufe mit einem maximalen Druck von 30 bar (3 MPa). Eine Vorhersage ihrer Eigenschaften bei einer Verwendung in einem offenen Joule-Thomson-Kühler mit Nichtgleichgewichtsbedingungen ist nicht möglich.

Die eingesetzten Fluide verhalten sich nicht ideal. Insbesondere bei tiefen Temperaturen, wie sie während des Einsatzes eines Lenkflugkörpers auftreten können, ergeben sich in einer Druckflasche signifikante Druckerniedrigungen. Gerade bei tiefen Temperaturen, die für Flugkörper bis zu -45°C absinken können, ergeben sich hierdurch merkliche Kühlleistungsverluste, da die Druckdifferenz für das so entspannende Gas verringert ist. In einer vorteilhaften Ausgestaltung der Erfindung wird daher das druckbeaufschlagte Fluid temperaturstabilisiert. Dies wird beispielsweise mittels Heizmatten oder integrierten Heizelementen, Peltier-Elementen oder über vorhandene dissipativen Wärmequellen, wie z. B. Elektronik, wobei beispielsweise Wärmerohre zum Wärmetransport eingesetzt werden können, vorgenommen. Derartige temperaturstabilisierenden Elemente werden insbesondere dann eingesetzt, wenn die durch Druckverlust auftretenden Kühlleistungsverluste nicht durch die ohnehin niedrige Umgebungstemperatur am Einsatzort kompensiert werden können. Findet eine Temperaturstabilisierung statt, so kann der Druckverlust des realen Gemisches kompensiert werden, was zu einer weiteren Erhöhung der Laufzeit des Joule-Thomson-Kühlers führt. Generell erhöht sich der Joule-Thomson-Effekt bei den verwendeten Gasen hin zu niedrigeren Temperaturen. Der Druckabfall bei kälterer Umgebung kann durch diesen Effekt (teilweise) wieder kompensiert werden. Eine zusätzliche Temperaturstabilisierung des Druckbehälters aber kälterem Joule-Thomson-Kühler wird dann zusätzlich zu einer weiteren Laufzeitverlängerung beitragen.

Wird das Fluid aus einer druckbeaufschlagten Druckflasche entspannt, so sind die zur Temperaturstabilisierung einzusetzenden Heizmittel zweckmäßigerweise so angeordnet, dass diese auf die Druckflasche wirken. Beispielsweise können Heizmatten oder dergleichen die Druckflasche umhüllen.

Sofern Heizelemente zur Temperaturstabilisierung eingesetzt werden, können diese bei nachlassendem Druck in der Druckflasche zu einer Druckerhöhung und somit zur Erhöhung der Kühlleistung des Joule-Thomson-Kühlers eingesetzt werden. Dies gelingt insbesondere dadurch, dass die Heizelemente das druckbeaufschlagte Fluid gegenüber der Umgebungstemperatur erwärmen. Aus der Praxis hat sich hierbei ein Wert von etwa 50° C als besonders geeignet herausgestellt.

Die angegebenen Fluidzusammensetzungen sind allesamt nicht giftig; sie sind jedoch in bestimmten Mischungsverhältnissen beim Eintritt in sauerstoffhaltige Luft explosiv. Um dieses explosive Verhalten zu verhindern, ist es vorteilhaft, dem Fluid als eine weitere Komponente Heptafluorpropan mit einem Gehalt zwischen 5 und 15 Vol.-% zuzumischen. Alternativ oder in Kombination kann weiter Tetrafluormethan mit einem Gehalt zwischen 3 und 20 Vol.-% beigemengt werden. Beide Komponenten sind als flammenhemmende Mittel zugelassen und können das aus Umweltgründen (nach dem Montreal-Abkommen) nicht mehr erlaubte Bromtrifluormethan ersetzen. Diese beiden Komponenten dienen also zur Flammenhemmung/-unterdrückung der brennbaren Alkane. Da insbesondere Tetrafluormethan ein recht hohes Kühlvermögen besitzt, kann diese Komponente auch noch dazu dienen, eine Laufzeitverlängerung des Joule-Thomson-Kühlers herbeizuführen und die eventuell mögliche Explosionsgefährlichkeit des eingesetzten Alkan-Gemisches herabsetzen.

In einer bevorzugten Ausgestaltung wird das expandierte Gas in Gegenstromrichtung zur Kühlung des druckbeaufschlagten Fluids vor seiner Entspannung eingesetzt. Durch diese Ausgestaltung wird die eingangs erwähnte Gegenstromkühlung verwirklicht, wobei das der Entspannungsdüse oder Drossel hochdruckseitig zueilende Fluid in Gegenstromrichtung von dem rückeilenden Gas durch einen entsprechenden Gegenstromwärmetauscher vor dem endgültigen Austritt in die Umgebung abgekühlt wird.

In einer vorteilhaften Weiterbildung des Verfahrens wird ein weiteres druckbeaufschlagtes Fluid entspannt, wobei das expandierende Gas des weiteren Fluids zur Kühlung des druckbeaufschlagten Fluids vor seiner Entspannung eingesetzt wird. Durch diese Maßnahme ist ein mehrstufiger Joule-Thomson-Kühler verwirklicht, wobei das zur Kühlung des Detektors eingesetzte Fluid vor dem Austritt aus der Entspannungsdüse mit dem expandierenden Gas und dem hierdurch abgekühlten weiteren Fluid im Wärmeaustausch ist. Durch diese Vorkühlung kann das zur Kühlung des Detektors eingesetzte Fluid bereits auf eine sehr tiefe Temperatur vor seiner Entspannung abgekühlt werden, so dass bei dessen Expansion aufgrund der weiteren Absenkung seiner Temperatur gegenüber der Inversionstemperatur eine Verbesserung der Kühlleistung erzielt wird.

Insbesondere kann das zur Kühlung eingesetzte Fluid durch die erste Expansionsstufe so weit vorgekühlt werden, dass es bei der dann vorliegenden geringen Temperatur an der Expansionsdüse oder Drossel über die folgende isenthalpe Expansion eine so große spezifische Kühlleistung besitzt, dass der Detektor innerhalb einer kurzen Zeit von der Raumtemperatur auf die geforderte Detektortemperatur von weniger als 100 K abkühlt. Mit dieser zweistufigen Ausbildung des Kühlers lassen sich insbesondere Kühlzeiten für ein Abkühlung von 295 K auf unter 100 K von weniger als 2 Sekunden erzielen. Letzteres wird mittlerweile für Lenkflugkörper gefordert, deren IR-Detektor innerhalb dieser Zeit auf die Betriebstemperatur abgekühlt werden muss, um beispielsweise mit Überschall fliegende Ziele rasch genug erfassen zu können.

Da das zur Kühlung eingesetzte Fluid bereits vor der Entspannung vorgekühlt ist, braucht eine zusätzliche Vorkühlung durch einen Gegenstromwärmetauscher mittels des zurücklaufenden entspannten Gases nicht mehr vorgenommen zu werden. Insbesondere kann das sich entspannende und bis zu seiner Siedetemperatur abkühlende Fluid bei der Expansion in Gestalt eines Spritzkühlers auf die Rückseite des zu kühlenden Detektors gesprüht werden. Letzteres ermöglicht eine Kühlerauslegung ohne eine mechanische Bindung an einen beweglichen Detektor.

Zur weiteren Erniedrigung der Temperatur des Fluids vor seiner Expansion kann aber das expandierte Gas des weiteren Fluids in Gegenstromrichtung zur Kühlung des druckbeaufschlagten Fluids vor seiner Entspannung eingesetzt werden. Hierbei steht das zur Kühlung eingesetzte Fluid vor seiner Entspannung nicht nur mit dem Brüdenraum der ersten Expansionsstufe in Wärmekontakt, sondern es wird sein Vorlauf zusätzlich über das rückströmende expandierte Gas des weiteren Fluids gekühlt.

In einer weiter bevorzugten Ausgestaltung wird das expandierte Gas des weiteren Fluids in Gegenstromrichtung auch zur Kühlung des druckbeaufschlagten weiteren Fluids vor seiner Entspannung selbst eingesetzt.

Hierdurch wird die erzielbare Temperatur im Brüdenraum der ersten Expansionsstufe weiter abgesenkt.

Aufgrund der hohen integralen Joule-Thomson-Koeffizienten kann als weiteres Fluid für die erste Kühlerstufe Methan und insbesondere Tetrafluormethan (auch Tetrafluorkohlenstoff genannt) verwendet werden. Aber auch Argon ist aus diesem Grunde einsetzbar. Argon besitzt gegenüber Stickstoff eine um den Faktor 1,5 höhere Kühlkapazität.

In einer alternativen Ausgestaltung wird aufgrund der erzielbaren Tieftemperaturen und aufgrund der hohen Kühlkapazität auch für das weitere Fluid das vorbeschriebene, ein positives Azeotrop bildende Gemisch, umfassend Argon oder Stickstoff als eine Hauptkomponente und zumindest ein Alkan als eine Nebenkomponente, eingesetzt. Dabei sind für das Gemisch ebenfalls bevorzugt die beschriebenen Ausgestaltungen und Zusammensetzungen einzusetzen.

Ausführungsbeispiele der Erfindung werden anhand einer Zeichnung näher erläutert. Dabei zeigen:
- Fig. 1:: schematisch einen Joule-Thomson-Kühler,
- Fig. 2:: in einem Querschnitt die technische Realisation eines Joule-Thomson-Kühlers,
- Fig.3:: in einem Diagramm den Enthalpie-Verlauf während des Entspannungsprozesses in einem offenen Joule-Thomson-Kühler und
- Fig. 4: schematisch einen zweistufigen Joule-Thomson-Kühler.

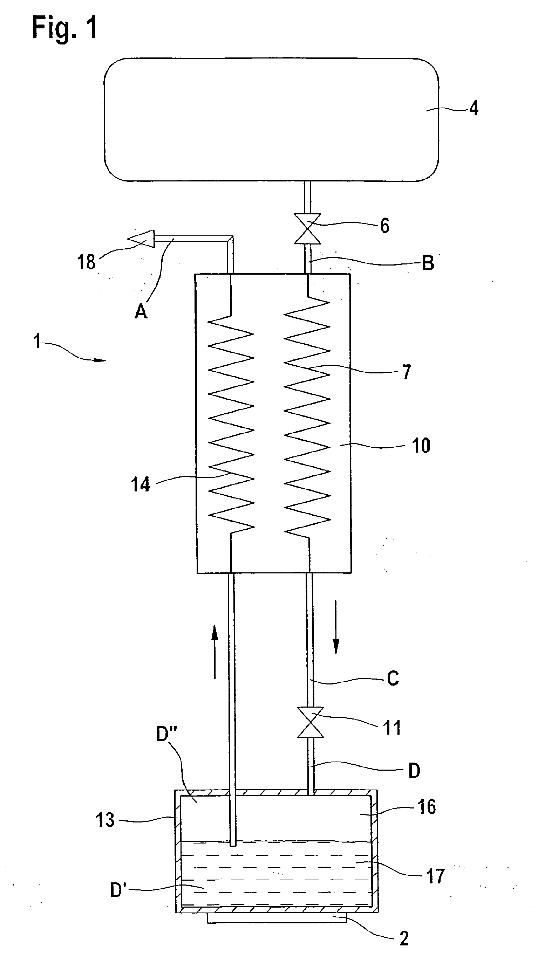

In Fig. 1 ist schematisch der Aufbau eines offenen Joule-Thomson-Kühlers 1 zur Kühlung eines IR-Detektors 2 dargestellt. Aus einer Druckflasche 4 strömt ein druckbeaufschlagtes Fluid über ein Einlassventil 6 zu einem Vorlaufweg 7 eines Gegenstromkühlers 10. Dabei wird die Temperatur des Fluids gegenüber der Temperatur in der Druckflasche 4 durch den kühleren Rücklauf 14 abgesenkt. Über eine Drossel 11, die insbesondere als eine Düse ausgestaltet ist, wird das druckbeaufschlagte Fluid entspannt. Das expandierende Gas tritt in einen Entspannungsraum bzw. Brüdenraum 13 ein, wobei es sich in Folge der Expansion abkühlt. Aufgrund der Temperaturabsenkung bildet sich in dem Entspannungsraum 13 bei der Siedetemperatur der azeotropen Zusammensetzung ein dynamisches Gleichgewicht zwischen einer Gasphase 16 und einer Flüssigphase 17, die über einen Wärmekontakt den am Boden des Entspannungsraums 13 angeordneten IR-Detektor abkühlt. Als Tieftemperatur wird hierbei eine Temperatur in der Nähe des Siedepunktes erzielt.

Aus dem Entspannungsraum strömt Gas der Zusammensetzung der Gasphase über einen Rücklaufweg 14 durch den Gegenstromkühler 10, wobei es das einströmende Fluid kühlt. Nach Durchlaufen des Rücklaufwegs 14 wird das entspannte Gas über einen Auslass 18 an die Umgebung abgegeben.

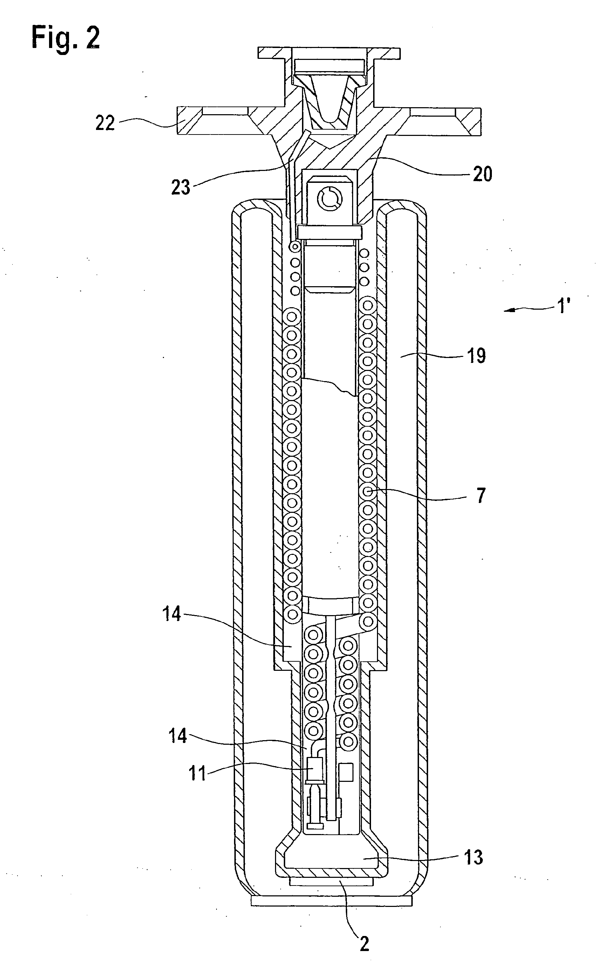

In Figur 2 ist in einem Querschnitt die technische Realisation eines offenen, Durchfluss geregelten Joule-Thomson-Kühlers 1' gezeigt. Dabei ist der zu kühlende IR-Detektor 2 an der Innenwandung eines Dewar-Gefäßes 19 angeordnet. Das Dewar-Gefäß 19 ist im Innenraum evakuiert, so dass eine gute thermische Isolation gegenüber der Wärmeleitung und Strahlung zur Umgebung gegeben ist. In den Innenbereich des Dewar-Gefäßes 19 erstreckt sich ein Stutzen 20, der zur Befestigung mit einem Flansch 22 versehen ist. Im Stutzen 20 ist eine Gaszuleitung 23 angeordnet, die zur Zuleitung eines druckbeaufschlagten Fluids mit einer Druckflasche verbunden ist. Das druckbeaufschlagte Fluid strömt entlang der den Stutzen 20 helixartig umlaufenden Leitungen, die den Vorlaufweg 7 bilden, zur Entspannungsdüse 11. Dort wird das Fluid entspannt. Das austretende Gas expandiert in den Entspannungsraum 13.

Aus dem Entspannungsraum 13 strömt Gas der Gasphase über die den Vorlauflaufweg bildenden Leitungen hinweg, wodurch der Rücklaufweg 14 gebildet ist, und gelangt am oberen Ende des Dewar-Gefäßes 19 nach außen. Hierdurch wird der Vorlauf in Gegenstromrichtung gekühlt.

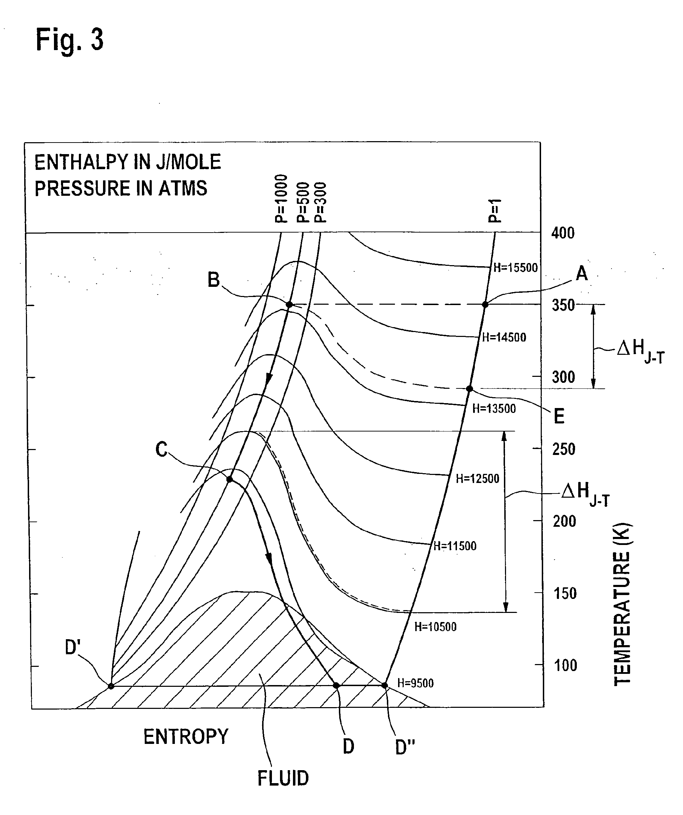

Die Wirkungsweise eines offenen Joule-Thomson-Kühlers gemäß Figuren 1 und 2 wird mittels dem in Figur 3 dargestellten Temperatur-Entropie-Diagramm (für Argon als Beispiel) erläutert. In dem Diagramm sind die während des Entspannungsprozesses im Joule-Thomson-Kühler auftretenden Zustände mit den Buchstaben "A" bis "D" eingezeichnet. Entsprechend sind in der schematischen Darstellung des Joule-Thomson-Kühlers gemäß Figur 1 die zugehörigen Punkte markiert.

Im Diagramm ist auf der Abszisse die Entropie des Systems aufgetragen. Auf der Ordinate sind die Temperatur bzw. die Linien gleicher Enthalpie des Systems markiert. Weiter sind in dem Diagram Isobaren mit einem Druck von p=1000 bar, p=500 bar, p=300 bar bzw. p=1 bar eingezeichnet. Des Weiteren sind die Kurvenverläufe konstanter Enthalpie im Diagramm eingezeichnet.

Ausgehend von einem mit einem Druck von p=500 bar beaufschlagten Fluid von einer Temperatur von 350 K am Punkt B durchströmt das Fluid gemäß Figur 1 den Vorlaufweg 7, wobei es durch das gegenströmende rücklaufende entspannte und abgekühlte Gas vorgekühlt wird. Der Druck entlang des Vorlaufwegs 7 bis zur Entspannungsdüse 11 kann dabei als konstant angesehen werden. Folglich bewegt sich das System gemäß Figur 3 ausgehend vom Punkt B auf einer Kurve konstanten Druckes von p=500 bar zu einem Punkt C niedriger Temperatur.

An der Entspannungsdüse 11 wird das Fluid entspannt. Das austretende Gas expandiert gemäß Fig. 1 in den Entspannungsraum 13. Durch die Expansion kühlt sich dabei das Gas entlang einer Kurve konstanter Enthalpie ab. Der Systemzustand bewegt sich hierbei gemäß Figur 3 vom Punkt C zu dem Punkt D im Nassdampfgebiet, wobei das Gas teilweise in den flüssigen Aggregatszustand übertritt. Nach dem Hebelgesetz entsteht im Verhältnis zu D-D" eine Menge Flüssigkeit und zu D-D' eine entsprechende Menge Gas. Im Entspannungsraum steht die flüssige Phase entsprechend dem Zustandspunkt D' in einem Gleichgewicht mit der Gasphase D". Weitgehend durch die Flüssigkeitsmenge wird der mit dem Entspannungsraum 13 in thermischen Kontakt stehende Detektor 2 auf eine Temperatur von unterhalb 100 K abkühlt.

Aus der Gasphase D" strömt das Gas bei einem Normaldruck von circa p=1 bar über den Rücklaufweg 14 nach außen. Dabei erwärmt sich das ausströmende Gas im Rücklaufweg 14 durch Wärmeabfuhr aus dem zuströmenden Fluid im Vorlaufweg 7. Gemäß Figur 3 bewegt sich entsprechend das System auf einer Kurve konstanten Druckes von P=1 bar zu dem Punkt A mit der Umgebungstemperatur von 350 K.

Betrachtet man ausgehend vom Punkt B die Kurve konstanter Enthalpie, so gelangt man zu dem Punkt E. Nach Austritt des Gases aus dem Joule-Thomson-Kühlers weist das Gesamtsystem eine erhöhte Enthalpie des Punkte A auf. Die reversible Kühlleistung des Joule-Thomson-Kühlers berechnet sich aus der Enthalpie-Differenz in den Punkten A und E. Diese Enthalpie-Differenz wird im idealen Fall dem Detektor als Kühlleistung und der Umgebung als dissipative Energie entzogen.

Mit einem Joule-Thomson-Kühler gemäß Figur 2 wurden mehrere Versuche mit unterschiedlichen Fluidgemischen in einem Temperaturbereich zwischen -54° C bis +70° C durchgeführt. Dabei wurde eine Druckflasche mit einem Volumen von 415 ccm mit einem Anfangsdruck mit 345 bar bei einer Temperatur von 22° eingesetzt. Als Fluidgemische wurde ein Fluid I mit 30 Vol.-% Stickstoff, 30 Vol.-% Methan, 20 Vol.-% Ethan und 20 Vol.-% Propan sowie ein Fluid II mit einem Anteil von 30 Vol.-% Stickstoff, 35 Vol.-% Methan und 35 Vol.-% Ethan untersucht. Im Unterschied zu Argon und Luft als reine Kühlgase wurde nun das Verhalten der Fluidgemische hinsichtlich der Laufzeit des Joule-Thomson-Kühlers untersucht. Die Laufzeit wurde hierbei bei einer Temperatur der Druckflasche von - 54° C, + 22° C und + 70° C untersucht. Als Dewar-Gefäß 19 entsprechend Figur 2 wurde ein Glas-Dewar zur Betrachtung der Vorgänge im Entspannungsraum 13 eingesetzt.

Die gleichen Untersuchungen wurden mit einem Fluid III einer Zusammensetzung von 56 Vol.-% Argon von 44 Vol.-% Methan sowie einem Fluid IV aus einer Mischung von 70 Vol.-% Stickstoff und 30 Vol.-% Methan durchgeführt.

Als Ergebnis ist festzuhalten, dass sich in allen untersuchten Temperaturbereichen mit den eingesetzten Fluiden I, II, III und IV bei einer erzielten Kühltemperatur unterhalb 100 K gegenüber Luft und Argon eine Laufzeitverlängerung eingestellt hat. Die größte Laufzeitverlängerung zeigte hierbei Fluid I. Der Verlängerungsfaktor lag hierbei bei den Temperaturen - 45° C, + 22° C und +70° C gegenüber Luft bei 2,6; 4,4 bzw. 4,4 und gegenüber Argon bei 1,9; 2,7 bzw. 2,9. Fluid II wies bei der untersuchten Temperatur von 22° C gegenüber Argon eine Laufzeitverlängerung um einen Faktor von 2,4 und gegenüber Luft von 4,0 auf.

Insgesamt konnten mit dem Referenzkühler aus einem Druckbehälter von nur 415 cm³ und einem Anfangsdruck von 340 bar bei Raumtemperaturen Laufzeiten zwischen 4 und 8 Stunden und bei Temperaturen von +70° C zwischen 4 und 11 Stunden erzielt werden. Durch höhere Anfangsdrücke und temperaturstabilisierte Druckbehälter lassen sich die Laufzeiten noch erhöhen.

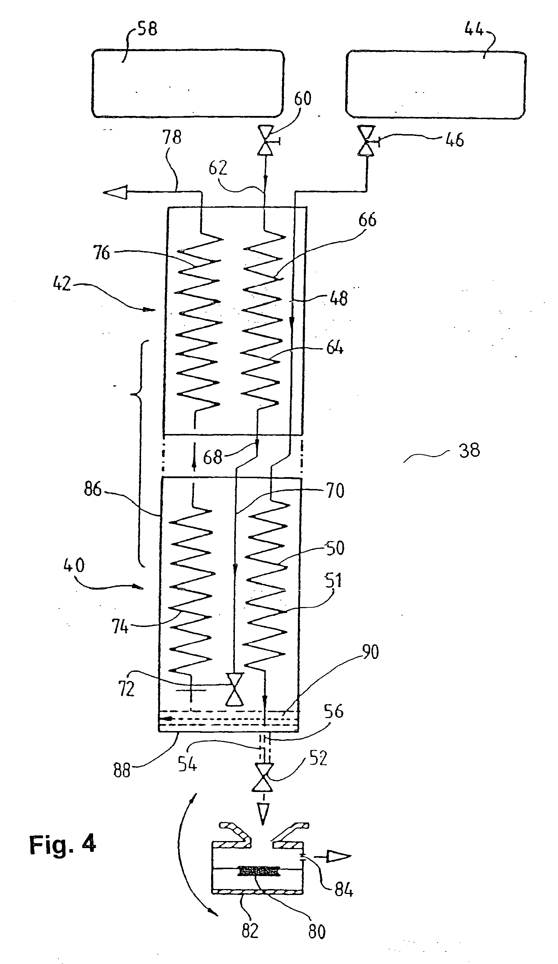

Fig. 4 zeigt schematisch den Aufbau eines zweistufigen Joule-Thomson-Kühlers 38, wobei ein durch eine Entspannung (Stufe 2) einen IR-Detektor 80 kühlendes Fluid aus einem ein positives Azeotrop bildenden Gemisch durch eine Entspannungskühlung eines weiteren Fluids (Stufe 1) vorgekühlt wird.

Der in Fig. 4 dargestellte Joule-Thomson-Kühler 38 wird zum besseren Verständnis gedanklich aufgeteilt in zwei Kühler 40 und 42, die aber nicht mit den Entspannungsstufen zu verwechseln sind.

Der erste Kühler 40 wird hierbei mit einem ein positives Azeotrop bildenden Gemisch aus einem Druckgasbehälter 44 betrieben. Das verwendete Gemisch in dem Druckgasbehälter 44 hat Umgebungstemperatur und steht unter einem Druck von 200 - 500 bar. Das Gemisch wird über ein Ventil 46 und eine gerade durch den Kühler 42 hindurchlaufende Leitung 48 zu einem Vorlaufweg 50 eines Wärmetauschers 51 des Kühlers 40 geleitet. Der erste Kühler 40 ist ein Expansionskühler mit einer Entspannungsdüse oder Drossel 52. Die Drossel 52 ist mit dem Ausgang des Vorlaufweges 50 über eine Hochdruckleitung 54 verbunden. Die Hochdruckleitung 54 ist mit einer Wärmeisolation 56 versehen.

Der zweite Kühler 42 wird mit Tetrafluormethan aus einem Druckgasbehälter 58 betrieben. Das Tetrafluormethan in den Druckgasbehälter 58 hat ebenfalls Umgebungstemperatur und steht unter einem Druck von 200 - 350 bar. Das Tetrafluormethan wird über ein Ventil zu dem Eingang 62 eines Vorlaufweges 64 eines Gegenstrom-Wärmetauschers 66 des zweiten Kühlers 42 geleitet. Von dem Ausgang 68 des Vorlaufweges 64 des Gegenstrom-Wärmetauschers 66 geht eine Leitung 70 gerade durch den zweiten Kühler 40 hindurch zu einer Drossel oder Entspannungsdüse 72. Die Drossel 72 sitzt an dem dem zweiten Kühler 42 abgewandten Ende des ersten Kühlers 40. Aus der Drossel 72 tritt das unter Hochdruck stehende Tetrafluormethan aus. Dabei entspannt sich dieses und kühlt sich ab. Das entspannte und abgekühlte Tetrafluormethan fließt nun durch einen Rücklaufweg 74 des Wärmetauschers 51 des ersten Kühlers 40 im Gegenstrom zu dem vorlaufenden, ein positives Azeotrop bildenden Gemisch. In dem ersten Kühler 40 wird also dieses Gemisch durch den entspannten Tetrafluormethan-Nassdampf vorgekühlt, nicht aber durch das entspannte Gemisch selbst. Das entspannte Tetrafluormethan fließt dann durch einen Rücklaufweg 76 des Gegenstrom-Wärmetauschers 66 des zweiten Kühlers 42. Hier wird das vorlaufende, unter Hochdruck stehende Tetrafluormethan durch das entspannte und abgekühlte Tetrafluormethan vorgekühlt. Das entspannte Tetrafluormethan tritt aus dem Rücklaufweg 76 an einem Auslass 78 aus.

Das ausströmende, zur Kühlung eingesetzte, ein positives Azeotrop bildende Gemisch ist in einem Strahl auf einen IR-Detektor 80 gerichtet, der in einem beweglichen Träger 82 angeordnet ist. Das sich entspannende Gas aus diesem Gemisch tritt dann durch einen Durchbruch 84 aus dem Träger 82 aus.

Die beiden Kühler 40 und 42 sind von einem Mantel 86 umschlossen, der objektseitig durch eine Stirnwand 88 abgeschlossen ist. Die wärmeisolierte Hochdruckleitung 54 ist durch die Stirnwand 88 hindurchgeführt.

Als Gemisch zur Abkühlung des IR-Detektors 80 eignet sich insbesondere das untersuchte, vorbeschriebene Fluid III mit 56 Vol.-% Argon und 44 Vol-% Methan. Dieses Gemisch besitzt eine Siedetemperatur von etwa 96 K (bei 1 bar) und eine Schmelztemperatur von weniger als 75 K. Die Kühlleistung ist gegenüber Argon um einen Faktor von ca. 2 besser. Auch ist der Betrieb der zweiten Expansionsstufe (dem ersten Kühler 40 zugeordnet) mit einem Gemisch aus 30 - 70 Vol.-% Stickstoff, 15 - 35 Vol.-% Propan und 15-35 Vol.-% Ethan möglich. Eine Mischung aus 40 Vol.-% Stickstoff, 30 Vol.-% Propan und 30 Vol.-% Ethan ergibt im Vergleich gegenüber Stickstoff eine ca. 3 bis 7-fach höhere Kühlkapazität bei einer Siedetemperatur von nur 78 °K (bei 1 bar). Es wurde kein Ausfrieren der Expansionsdüse festgestellt. Gegenüber dem auch verwendbaren Argon ergibt sich mit dem Mischgas im Vergleich eine 2 bis 4,5-fach höhere Kühlkapazität bei einer etwas höheren Siedetemperatur

Weiter kann ein Gemisch aus 50 - 64 Vol.-% Stickstoff und 36 - 50 Vol.-% Methan eingesetzt werden. Eine Mischung aus gleichen Teilen Stickstoff und Methan weist eine Siedetemperatur von 82 °K (bei 1 bar) auf. Die Mischung verbleibt bei der Siedetemperatur des Stickstoffs flüssig. Gegenüber reinem Stickstoff weist, wie eigene Messungen ergeben, das Gemisch eine etwa 2 -fach erhöhte Kühlkapazität auf.

Des Weiteren kann ein Gemisch aus 20 - 70 Vol.-% Stickstoff, 20 - 40 Vol.-% Methan und 10 -40 Vol.-% Ethan verwendet werden. Da sich Methan in flüssigem Stickstoff löst, Ethan sich in flüssigem Methan löst und Ethan und Propan miteinander löslich sind, weist diese Mischung eine weiter verbesserte Kühlkapazität auf. Insbesondere ergibt sich mit einem Gemisch aus 30 Mol-% Stickstoff und jeweils 35 Mol-% Methan und Ethan im Vergleich gegenüber Stickstoff eine 4 - 9-fach erhöhte Kühlkapazität. Die Siedetemperatur dieses Gemisches liegt bei etwa 80 K (1 bar). Dieses Gemisch verhält sich wie ein azeotropes Gemisch und es besitzt die Eigenschaften eines nahezu eutektischen Gemisches, da bei der tiefen Siedetemperatur kein Ausfrieren auftritt.

Ferner weist auch ein Gemisch aus 20 - 70 Vol.-% Stickstoff, 10 - 30 Vol.-% Methan und jeweils 10 - 25 Vol.-% Ethan und Propan günstige Eigenschaften auf. Für ein Gemisch aus 30 Vol.-% Stickstoff, 30 Vol.-% Methan und jeweils 20 Vol.-% Ethan und Propan liegt die Siedetemperatur bei etwa 80°K (bei 1 bar). Die Kühlkapazität liegt im Vergleich mit Stickstoff um den Faktor 7 bis 12 höher.

### Bezugszeichenliste

- 1,1': Joule-Thomson-Kühler
- 2: IR-Detektor
- 4: Druckflasche
- 6: Einlassventil
- 7: Vorlaufweg
- 10: Gegenstromkühler
- 11: Entspannungsdüse / Drossel
- 13: Entspannungsraum (Brüdenraum)
- 14: Rücklaufweg
- 16: Gas
- 17: Flüssigkeit
- 18: Auslass
- 19: Dewar-Gefäß
- 20: Stutzen
- 22: Flansch
- 23: Gaszuleitung
- 38: Joule-Thomson-Kühler, zweistufig
- 40: erster Kühler
- 42: zweiter Kühler
- 44: Druckgasbehälter
- 46: Ventil
- 48: Leitung
- 50: Vorlaufweg
- 51: Wärmetauscher
- 52: Entspannungsdüse / Drossel
- 54: Hochdruckleitung
- 58: Druckgasbehälter
- 62: Eingang
- 64: Vorlaufweg
- 66: Gegenstrom-Wärmetauscher
- 68: Ausgang
- 70: Leitung
- 72: Entspannungsdüse / Drossel
- 74: Rücklaufweg
- 76: Rücklaufweg
- 78: Auslass
- 80: IR-Detektor
- 82: Träger
- 84: Durchbruch
- 86: Mantel
- 88: Stirnwand
- 90: Entspannungsraum / Brüdenraum

## Patentansprüche

1. Verfahren zur Kühlung eines Detektors, insbesondere eines IR-Detektors (2) im Suchkopf eines Lenkflugkörpers, wobei nach einer Entspannung eines druckbeaufschlagten Fluids das expandierende Gas zur Kühlung des Detektors verwendet wird,
**dadurch gekennzeichnet,**
**dass** als Fluid ein ein positives Azeotrop bildendes Gemisch, umfassend Argon oder Stickstoff als eine Hauptkomponente und zumindest ein Alkan als eine Nebenkomponente, entspannt wird.

2. Verfahren nach Anspruch 1,
**dadurch gekennzeichnet,**
**dass** die Siedetemperatur des Azeotrops unterhalb von 100 K, insbesondere unterhalb von 90 K liegt.

3. Verfahren nach Anspruch 1 oder 2,
**dadurch gekennzeichnet,**
**dass** ein Gemisch entspannt wird, dessen Azeotrop eine Zusammensetzung in der Nähe der eutektischen Zusammensetzung aufweist.

4. Verfahren nach einem der vorhergehenden Ansprüche,
**dadurch gekennzeichnet,**
**dass** die Komponenten für das jeweilige Gemisch so ausgewählt werden, dass sie in der spezifischen kondensierten flüssigen Phase vollständig miteinander löslich sind, wobei mindestens eine flüssige Komponente mit einer anderen flüssigen Komponente löslich ist, die vorzugsweise wieder mit einer nächsten flüssigen Komponente löslich ist.

5. Verfahren nach Anspruch 3 oder 4,
**dadurch gekennzeichnet,**
**dass** die eutektische Zusammensetzung des Gemisches einen Schmelzpunkt unterhalb von 90 K aufweist.

6. Verfahren nach einem der vorhergehenden Ansprüche,
**dadurch gekennzeichnet,**
**dass** das Fluid mit einem Druck von mehr als 100 bar, insbesondere von mehr als 300 bar, bevorzugt bis über 800 bar, beaufschlagt ist.

7. Verfahren nach Anspruch 6,
**dadurch gekennzeichnet,**
**dass** der Anfangsdruck des Gemisches so gewählt wird, dass die Partialdrücke der einzelnen Gase entsprechend der molaren Zusammensetzung im Gemisch im Druckbereich des jeweiligen optimalen integralen Joule-Thomson-Koeffizienten jedes einzelnen Gases liegen.

8. Verfahren nach Anspruch 6 oder 7,
**dadurch gekennzeichnet,**
**dass** als Fluid ein Gemisch umfassend 30-70 Vol.-% Stickstoff und 20-80Vol.-% Methan eingesetzt wird.

9. Verfahren nach einem der Ansprüche 1 bis 7,
**dadurch gekennzeichnet,**
**dass** als Fluid ein Gemisch umfassend 20-70 Vol.-% Stickstoff, 20-40 Vol.-% Methan und 10-40 Vol.% Ethan eingesetzt wird.

10. Verfahren nach Anspruch 9,
**dadurch gekennzeichnet,**
**dass** als Fluid ein Gemisch umfassend 30-70 Vol.-% Stickstoff, 15-35 Vol.-% Ethan und 15-35 Vol. % Propan eingesetzt wird.

11. Verfahren nach einem der Ansprüche 1 bis 7,
**dadurch gekennzeichnet,**
**dass** als Fluid ein Gemisch umfassend 20-70 Vol.-% Stickstoff, 10-30 Vol.-% Methan, 10-25 Vol.-% Ethan und 10-25 Vol. % Propan eingesetzt wird.

12. Verfahren nach einem der Ansprüche 1 bis 7,
**dadurch gekennzeichnet,**
**dass** als Fluid ein Gemisch umfassend 45-60 Vol.-% Argon und 35-50 Vol.% Methan eingesetzt wird.

13. Verfahren nach einem der Ansprüche 1 bis 7,
**dadurch gekennzeichnet,**
**dass** das druckbeaufschlagte Fluid temperaturstabilisiert wird.

14. Verfahren nach Anspruch 13,
**dadurch gekennzeichnet,**
**dass** das Fluid auf eine Temperatur oberhalb der Raumtemperatur stabilisiert wird.

15. Verfahren nach Anspruch 13 oder 14,
**dadurch gekennzeichnet,**
**dass** das Fluid aus einer druckbeaufschlagten Druckflasche (4) entspannt wird, und dass die Temperaturstabilisierung mittels eines auf die Druckflasche (4) wirkenden Heizelements vorgenommen wird.

16. Verfahren nach einem der vorhergehenden Ansprüche,
**dadurch gekennzeichnet,**
**dass** dem Fluid als eine weitere Komponente Heptafluorpropan mit einem Gehalt zwischen 5 und 15 Vol.-% beigemischt ist.

17. Verfahren nach einem der vorhergehenden Ansprüche,
**dadurch gekennzeichnet,**
**dass** dem Fluid als eine weitere Komponente Tetrafluormethan mit einem Gehalt zwischen 3 und 20 Vol.-% beigemischt ist.

18. Verfahren nach einem der vorhergehenden Ansprüche,
**dadurch gekennzeichnet,**
**dass** das expandierte Gas in Gegenstromrichtung zur Kühlung des druckbeaufschlagten Fluids vor seiner Entspannung eingesetzt wird.

19. Verfahren nach einem der Ansprüche 1 bis 17,
**dadurch gekennzeichnet,**
**dass** ein weiteres druckbeaufschlagtes Fluid entspannt wird, wobei das expandierende Gas des weiteren Fluids zur Kühlung des druckbeaufschlagten Fluids vor seiner Entspannung eingesetzt wird.

20. Verfahren nach Anspruch 19,
**dadurch gekennzeichnet,**
**dass** das expandierte Gas des weiteren Fluids in Gegenstromrichtung zur Kühlung des druckbeaufschlagten Fluids vor seiner Entspannung eingesetzt wird.

21. Verfahren nach Anspruch 19 oder 20,
**dadurch gekennzeichnet,**
**dass** das expandierte Gas des weiteren Fluids in Gegenstromrichtung zur Kühlung des druckbeaufschlagten weiteren Fluids vor seiner Entspannung eingesetzt wird.

22. Verfahren nach Anspruch 19 oder 20,
**dadurch gekennzeichnet,**
**dass** das expandierende Gas des Fluids gegen den Detektor gesprüht wird.

23. Verfahren nach einem der Ansprüche 19 bis 22,
**dadurch gekennzeichnet,**
**dass** als weiteres Fluid Tetrafluormethan verwendet wird.

24. Verfahren nach einem der Ansprüche 19 bis 22,
**dadurch gekennzeichnet,**
**dass** auch als weiteres Fluid ein Fluid gemäß einem der Ansprüche 1 bis 18 eingesetzt wird.
